# EUROPÄISCHE PATENTSCHRIFT

(11) **EP 1 148 580 B1**
(45) Veröffentlichungstag und Bekanntmachung des Hinweises auf die Patenterteilung: **24.11.2004**
(21) Anmeldenummer: 01109183.2
(22) Anmeldetag: 12.04.2001
(51) Int. Cl.: H01Q 1/52, H01Q 1/22

(54) **Einsteckkarte zur Funkkommunikation und Entstörvorrichtung zur Verwendung mit einer Einsteckkarte**
Plug-in card for radio communications and interference suppression element for use with such a card
Carte insérable pour communication radio et élément antiparasite utilisable avec une telle carte

(30) Priorität: 20.04.2000 DE 20007313 U
(43) Veröffentlichungstag der Anmeldung: 24.10.2001
(73) Patentinhaber: Dosch & Amand GmbH & Co. KG, 81679 München (DE)
(72) Erfinder: Eckardt, Holger, 85662 Hohenbrunn (DE)
(74) Vertreter: Grünecker, Kinkeldey, Stockmair & Schwanhäusser Anwaltssozietät

(56) Entgegenhaltungen:
- WO-A-99/02002
- US-A- 5 914 696
- PATENT ABSTRACTS OF JAPAN vol. 2000, no. 07, 29. September 2000 (2000-09-29) & JP 2000 101333 A (SONY CORP), 7. April 2000 (2000-04-07)

## Beschreibung

Die Erfindung betrifft eine Einsteckkarte zur Funkkommunikation und eine Entstörvorrichtung zur Verwendung mit einer Einsteckkarte. Insbesondere betrifft die Erfindung eine PCMCIA- (Personal Computer Memory Card International Association-) bzw. PC-Karte und Funkkommunikation gemäß dem DECT- (Digital European Cordless Telecommunication-) Standard.

PCMCIA-Karten sind standardisierte Einsteckkarten zur Erweiterung eines Computers, beispielsweise eines Laptop-Computers oder Notebook-Computers. Durch eine Vielzahl von verschiedenartigen Einsteckkarten kann ein Computer einfach und bequem mit verschiedenen Funktionalitäten ausgerüstet werden. Die Einsteckkarten bieten beispielsweise Speichererweiterungen und Schnittstellen zu anderen Computervorrichtungen. Weiterhin stellen einige Einsteckkarten eine schnurlose Kommunikation, beispielsweise gemäß des DECT-Standards, zur Verfügung.

DECT ist der einheitliche digitale europäische Standard für schnurlose Telefone. Dieser Standard baut auf den bisherigen Standards CT1 und CT2 auf und ermöglicht digitales schnurloses Telefonieren für eine Vielzahl von Teilnehmern über eine oder mehrere Basisstationen.

Gemäß des DECT-Standards ist für die Funkübertragung ein Frequenzbereich zwischen 1880 MHz bis 1900 MHz, der gemäß eines Frequenzvielfachzugriffs (Frequency Division Multiple Access, FDMA) in 10 Trägerfrequenzen zu je 1728 KHz aufgeteilt ist. Jeder Träger wird zusätzlich im Zeitvielfachzugriff (Time Division Multiple Access, TDMA) betrieben, wobei die für jeden Träger vorgesehenen 24 Zeitschlitze je zur Hälfte der Verbindung Basisstation-Mobilstation sowie je zur Hälfte der Verbindung Mobilstation-Basisstation dienen. Damit stellt ein DECT-System 120 Vollduplexkanäle mit einer Kanalbitrate von 32 kbps zur Verfügung und gestattet bei einer Abstrahlleistung von 0,25 W einen Kommunikationsradius von ca. 500 m in freiem Gelände sowie von ca. 100 m innerhalb von Gebäuden.

WO 98/40976 beschreibt eine PCMCIA-Karte mit einer Antenne, einer HF-DECT-Sende- und Empfangseinrichtung, einer Steuereinrichtung und eine Steckverbindereinrichtung, wobei die Steuereinrichtung eine Datenfluss- und Datensteuerlogik aufweist, die in der Lage ist, Daten, die über die Steckverbindereinrichtung empfangen werden, in eine Vielzahl von Formaten oder Protokolle umzusetzen, um die Daten jeweils bereits auf der Karte in das für den entsprechenden Dienst, für den die Daten vorgesehen sind, erforderliche Format oder Protokoll umzusetzen, um die Daten jeweils bereits auf der Karte in das für den entsprechenden Dienst, für den die Daten vorgesehen sind, erforderliche Format oder Protokoll umzusetzen und die so umgesetzten Daten an die HF-DECT-Sendeund Empfangseinrichtung zur Verfügung zu stellen, von der die umgesetzten Daten über die Antenne als HF-Signale im DECT-Standard gesendet werden.

WO 99/02002 beschreibt eine Kommunikationseinsteckkarte, vorzugsweise eine PCMCIA-Karte, wobei die Karte eine Sende- und Empfangseinrichtung sowie eine Antenne zur Funkkommunikation aufweist, wobei die Antenne zumindest teilweise aus dem eigentlichen Kartenkörper herausragt und wobei die Karte weiterhin eine Anzeigeeinrichtung zum Anzeigen eines Betriebszustands aufweist, der vorzugsweise zumindest einen der folgenden Zustände umfasst: Basisstation erkannt / nicht erkannt, Datenübertragung aktiv / nicht aktiv.

Da die gemäß des Standes der Technik bekannten Einsteckkarten Antennen aufweisen, die eine Sendeleistung von bis zu 0,25 W abstrahlen, können diese Einsteckkarten unter Umständen die Funktion einer Computervorrichtung, in dem die Einsteckkarten eingesteckt sind und betrieben werden, beeinflussen, da sich ein Teil des gesendeten Hochfrequenzsignals aufgrund unzureichender Entkopplung innerhalb der Computervorrichtung, beispielsweise über eine Leiterplatte des Computers, an Eingänge von aktiven Bauteilen ausbreiten kann. Dieses Signal kann dann unter Umständen beispielsweise an Eingangsschutzdioden der aktiven Bauteile gleichgerichtet werden und verursacht eine Arbeitspunktverschiebung der aktiven Bauteile. Als Folgen sind beispielsweise Störungen eines Audiosystems der Computervorrichtung, die sich in Form von Brummen äußern, und Störungen von Eingabesystemen, die sich beispielsweise durch zufällige Bewegungen eines Mauszeigers äußern, möglich.

Es ist somit die Aufgabe der Erfindung, Vorrichtungen bereitzustellen, die Störungen eines Computers, die durch eine Einsteckkarte zur Funkkommunikation verursacht werden, zu reduzieren bzw. zu verhindern.

Diese Aufgabe wird durch die Gegenstände der unabhängigen Ansprüche 1 und 5 erfindungsgemäß gelöst.

Bevorzugte Ausgestaltungen der Erfindung sind Gegenstände der abhängigen Ansprüche.

Gemäß der Erfindung wird die störende Beeinflussung des Computers durch die Einsteckkarte zur Funkkommunikation durch einen elektrisch leitfähigen, vorzugsweise im wesentlichen metallischen, Arm, der zumindest teilweise über den Körper der Einsteckkarte herausragt, reduziert bzw. verhindert. Für eine Anpassung des Arms an einen Frequenzbereich der Funkkommunikation, d. h. einen Resonanzabgleich, ist der Arm räumlich veränderbar. Vorzugsweise ist der Arm in einer Hauptebene der Einsteckkarte schwenkbar bzw. drehbar. Die Anpassung des Arms auf den Frequenzbereich der Funkkommunikation kann während des Betriebs durch Änderung der Stellung des Arms relativ zur Einsteckkarte und der zumindest teilweise aus dem Körper der Einsteckkarte herausragenden Antenne erreicht werden, da die Umgebung eine ausreichende kapazitive Belastung des Arms verursacht. Die Schwenkebene des Arms kann auch schräg zu einer Hauptebene der Einsteckkarte liegen. Weiterhin kann die Anpassung durch Ändern der Länge des Arms erreicht werden.

Die effektive Länge des Arms beträgt im wesentlichen ein Viertel der für die Funkkommunikation maßgeblichen Wellenlänge. Dabei kann die Länge des Arms aufgrund der kapazitiven Kopplung kürzer sein. Beispielsweise ergibt sich für eine Frequenz von 1890 MHz eine Länge des Arms um 35 mm.

Gemäß einer ersten Ausführungsform ist der Arm direkt mit dem Körper der Einsteckkarte, beispielsweise mittels einer Verbindungseinrichtung, bewegbar verbunden. Die Einsteckkarte 1 zur Funkkommunikation enthält eine Sende- und Empfangseinrichtung, eine Antenne 2, die mit der Sende- und Empfangseinrichtung verbunden ist und zumindest teilweise aus einem elektrisch leitenden Körper 3 der Einsteckkarte 1 herausragt und einen elektrisch leitenden Arm 4, der eine effektive Länge hat, die im wesentlichen einem Viertel der für die Funkkommunikation maßgeblichen Wellenlänge entspricht, mit dem Körper 3 elektrisch leitend verbunden ist und im Bereich der Antenne 2 bewegbar angeordnet ist, so dass der Arm 4 während der Funkkommunikation in mindestens einer Stellung in Resonanz ist und ein elektrisches Feld, das aufgrund der Funkkommunikation auf dem Körper 3 entsteht, bei dieser Stellung des Arms 4 minimiert wird, und somit eine störende Beeinflussung einer Vorrichtung, die die Einsteckkarte 1 aufnimmt, minimiert wird.

Gemäß einer zweiten Ausführungsform ist der Arm Teil einer Entstörvorrichtung, die zum Nachrüsten einer herkömmlichen Einsteckkarte verwendbar ist.

Die Entstörvorrichtung enthält eine Befestigungseinrichtung 5, die so dimensioniert ist, dass sie mit einem zumindest teilweise elektrisch leitenden Körper 3 einer PCMCIA- (Personal Computer Memory Card International Association-) bzw. PC-Einsteckkarte 1 zur Funkkommunikation verbindbar ist und diesen zumindest teilweise umgreift, und einen elektrisch leitenden Arm 4, der mit der Befestigungseinrichtung 5 bewegbar verbunden und so dimensioniert ist, dass er mit dem Körper 3 elektrisch leitend verbindbar ist, eine effektive Länge hat, die im wesentlichen einem Viertel einer für die Funkkommunikation maßgeblichen Wellenlänge entspricht und in der Umgebung einer Antenne 2, die zumindest teilweise aus dem Körper 3 der Einsteckkarte 1 herausragt, im wesentlichen in einer Hauptebene der Einsteckkarte 1 schwenkbar angeordnet ist, so dass der Arm 4 während der Funkkommunikation in mindestens eine Stellung geschwenkt werden kann, in der der Arm 4 in Resonanz ist und ein elektrisches Feld, das aufgrund der Funkkommunikation auf dem Körper 3 entsteht, minimiert wird.

Im folgenden werden Vorteile sowie bevorzugte Ausführungsformen der Erfindung unter Bezugnahme auf die beigefügten Zeichnungen näher erläutert. Dabei zeigen die Zeichnungen im einzelnen:
Fig. 1 eine schematische Darstellung einer Entstörvorrichtung gemäß einer bevorzugten Ausführungsform der Entstörvorrichtung, die zur Veranschaulichung an einer herkömmlichen PCMCIA-Karte angebracht ist,
Fig. 2 eine perspektivische schematische Darstellung der bevorzugten Ausführungsform der Entstörvorrichtung zur Veranschaulichung der räumlichen Gestaltung der Entstörvorrichtung und
Fig. 3 eine schematische Darstellung einer Seitenansicht der bevorzugten Ausführungsform der Entstörvorrichtung.

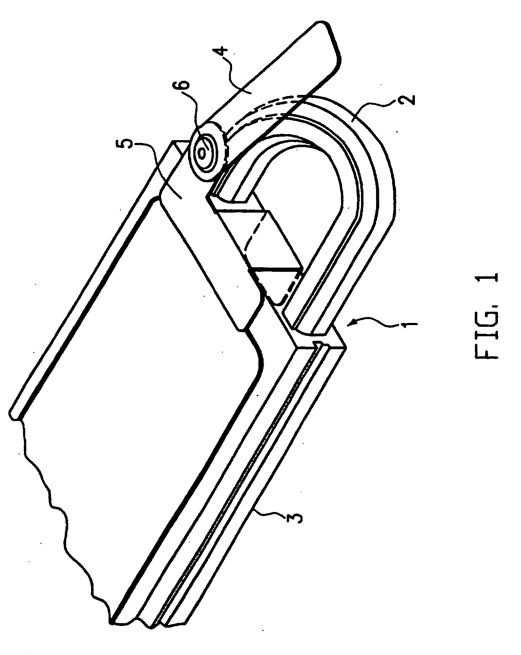

Die Erfindung wird im folgenden zunächst anhand der in Fig. 1 gezeigten bevorzugten Ausführungsform erläutert.

Fig. 1 zeigt eine Entstörvorrichtung, die an einer herkömmlichen PCMCIA-Karte 1 angebracht ist. Die Einsteckkarte 1 weist einen quaderförmigen, elektrisch leitfähigen, vorzugsweise metallischen Körper 3 auf. Die Abmessungen der Einsteckkarte 1 entsprechen beispielsweise dem PCMCIA-Kartenformattyp III. Die Verbindung der Einsteckkarte 1 mit einer entsprechenden Computervorrichtung erfolgt über eine Steckverbindereinrichtung (nicht gezeigt), die sich auf einer Schmalseite der Einsteckkarte 1 befindet. Auf einer gegenüberliegenden Schmalseite der Einsteckkarte 1 befindet sich eine Antenne 2, die zumindest teilweise über den Körper 3 der Einsteckkarte 1 herausragt und von einem Formteil, das beispielsweise als Griff oder Streukörper einer Anzeigeeinrichtung ausgeführt sein kann, umschlossen ist. Die Einsteckkarte 1 weist in ihrem Inneren weiterhin beispielsweise eine HF-Sende- und Empfangseinrichtung, einen PCMCIA-Plug- and Play-Baustein, eine Steuereinrichtung, enthaltend eine Datenfluss- und Signalsteuerlogik und eine Leistungssteuerlogik auf. Auf dem Körper 3 der Einsteckkarte 1 bildet sich eine Feldverteilung aus, die in Abständen eines Viertels der Betriebswellenlänge, also beispielsweise 4 cm bei einer Frequenz von 1890 MHz, Spannungsmaxima und Spannungsminima aufweist. Da die Spannungsmaxima im Inneren der Computervorrichtung auftreten, kann der Betrieb der Einsteckkarte 1 zur Funkkommunikation die Funktion der Computervorrichtung beeinflussen bzw. stören.

In Fig. 1 ist die bevorzugte Ausführungsform der Entstörvorrichtung auf der der Steckverbindereinrichtung gegenüberliegenden Schmalseite der Einsteckkarte 1 angebracht. In der bevorzugten Ausführungsform umfasst die Entstörvorrichtung einen bewegbaren Arm 4, eine Befestigungseinrichtung 5 und eine Verbindungseinrichtung 6, die beispielsweise einen Rohrniet umfasst. Zur Aufnahme des Rohrniets umfassen in der bevorzugten Ausführungsform der Entstörvorrichtung sowohl der Arm 4 als auch die Befestigungseinrichtung 5 eine Öffnung, die zur Aufnahme des Rohrniets geeignet ist. Alternativ kann entweder der Arm 4 oder die Befestigungseinrichtung 5 ausgeformt sein, um die Öffnung der Befestigungseinrichtung 5 oder des Arms 4 zu durchdringen und elektrisch leitend und unverlierbar an sich zu binden.

Die bevorzugte Ausführungsform der Erfindung zeichnet sich insbesondere durch einen mechanisch einfachen und daher kostengünstigen Aufbau aus. In der bevorzugten Ausführungsform der Entstörvorrichtung bestehen der Arm 4 und die Befestigungseinrichtung 5 im wesentlichen aus Metall, beispielsweise aus Edelstahl. Bereiche der Befestigungseinrichtung 5 und des Arms 4, beispielsweise ein freies Ende des Arms 4, sind vorzugsweise lackiert. Dabei ist zu beachten, dass eine elektrisch leitende Verbindung zwischen dem Arm 4 und dem Körper 3 der Einsteckkarte 1 gewährleistet ist.

Der Arm 4 hat eine effektive Länge, die im wesentlichen einem Viertel der für die Funkkommunikation maßgeblichen Wellenlänge entspricht. Dabei kann die Länge des Arms 4 aufgrund kapazitiver Kopplung zur Umgebung kleiner als ein Viertel der Wellenlänge sein. In der bevorzugten Ausführungsform, die für eine Funkkommunikation gemäß des DECT-Standards für einen Frequenzbereich von etwa 1880 MHz bis 1900 MHz ausgelegt ist, beträgt die Länge des Arms 4 etwa 34,5 mm.

Die Befestigungseinrichtung 5 dient zur Befestigung der Entstörvorrichtung an einer herkömmlichen Einsteckkarte 1. In der bevorzugten Ausführungsform ist die Befestigungseinrichtung 5 U-förmig ausgeführt und weist zwei quasi parallele Schenkel auf, die entsprechend der Höhe der Einsteckkarte 1 voneinander beabstandet sind. Die Winkel zwischen den Schenkeln und einem Mittelteil der Befestigungseinrichtung 5 sind vorzugsweise kleiner als 90°, so dass die Befestigungseinrichtung 5 federnd klemmbar auf der Einsteckkarte 1 befestigt werden kann. Dabei ist die Befestigungseinrichtung 5 so ausgeführt, dass die Einsteckkarte 1 zusammen mit der Entstörvorrichtung in einen freien Steckplatz einer Computervorrichtung gesteckt werden kann, ohne Beschädigungen der Computervorrichtung oder der Einsteckkarte 1 zu verursachen.

In der bevorzugten Ausführungsform beträgt die Dicke der Schenkel beispielsweise in etwa 0,3 mm. Die Befestigungseinrichtung 5 und der Arm 4 können beispielsweise aus einem Blech der entsprechenden Stärke ausgestanzt und geformt sein.

In der bevorzugten Ausführungsform weist die Befestigungseinrichtung 5 seitlich einem Bereich mit der Öffnung für die Verbindungseinrichtung 6 auf. Die seitliche Anordnung des Bereichs ermöglicht ein platzsparendes Einschwenken des Arms 4, beispielsweise zur Lagerung oder beim Transport der Entstörvorrichtung bzw. der Computervorrichtung, die mit der Entstörvorrichtung bzw. der Einsteckkarte 1 gemäß einer alternativen Ausführungsform ausgerüstet ist. Diese Öffnung kann sich aber selbstverständlich auch in einem anderen Bereich der Befestigungseinrichtung befinden.

Die Verbindungseinrichtung 6 sorgt für eine bewegliche Verbindung von Arm 4 und Befestigungseinrichtung 5, so dass ein freies Ende des Arms in einer Hauptebene der Einsteckkarte 1 schwenkbar ist. Treten während des Betriebs der Computervorrichtung aufgrund der Funkkommunikation Störungen auf, kann der Arm in eine Stellung gebracht werden, bei der ein elektrisches Feld, das aufgrund der HF-Signale der Funkkommunikation auf dem Körper 3 entsteht, reduziert bzw. verhindert werden. Da sich auf dem Körper 3 der Einsteckkarte 1 kaum noch ein Feld ausbildet, gehen die Störungen deutlich zurück. Dabei ist ein guter elektrischer Kontakt zwischen der Entstörvorrichtung und dem Körper 3 der Einsteckkarte 1 erforderlich. Während ein Resonanzabgleich typischerweise durch Ändern der Länge des Arms durchgeführt werden kann, erfolgt gemäß der bevorzugten Ausführungsform der Erfindung der Resonanzabgleich durch Auffinden einer Stellung des Arms, bei der Resonanz vorliegt, so dass auf eine Änderung der Länge des Arms verzichtet werden kann. Dieser indirekte Resonanzabgleich beruht auf der elektrisch inhomogenen Umgebung, die beispielsweise durch ein metallisches Gehäuse der Computervorrichtung beeinflusst wird, so dass der Arm kapazitiv belastet wird und sich der Resonanzpunkt nach unten, d. h. nach einer kürzeren Länge des Arms 4 verschiebt. Durch Hin- und Herschwenken des Arms 4, der bewegbar mit der Befestigungseinrichtung 5 verbunden ist, läßt sich eine Stellung finden, bei der die Länge des Arms 4 und die kapazitive Kopplung des Arms 4 für die Resonanz notwendige Bedingungen ergeben. Der Resonanzabgleich kann von dem Anwender der Computervorrichtung durchgeführt werden, indem der Anwender eine Stellung des Arms 4 sucht, bei der die Störungen der Computervorrichtung, beispielsweise ein Brummen in einem Audiosystem der Computervorrichtung, minimal wird.

Alternative bevorzugte Ausführungsformen schließen Entstörvorrichtungen ein, die auf die Einsteckkarte 1 klemmbar oder einrastbar sind. Dabei kann eine Einsteckkkarte 1 Einrichtungen aufweisen, die eine Befestigung des Arms ermöglichen oder erleichtern. Weiterhin kann eine Einsteckkarte 1 gemäß einer alternativen Ausführungsform bereits einen Arm 4 aufweisen und so die Nachrüstung einer Entstöreinrichtung gemäß der bevorzugten Ausführungsform entbehrlich machen.

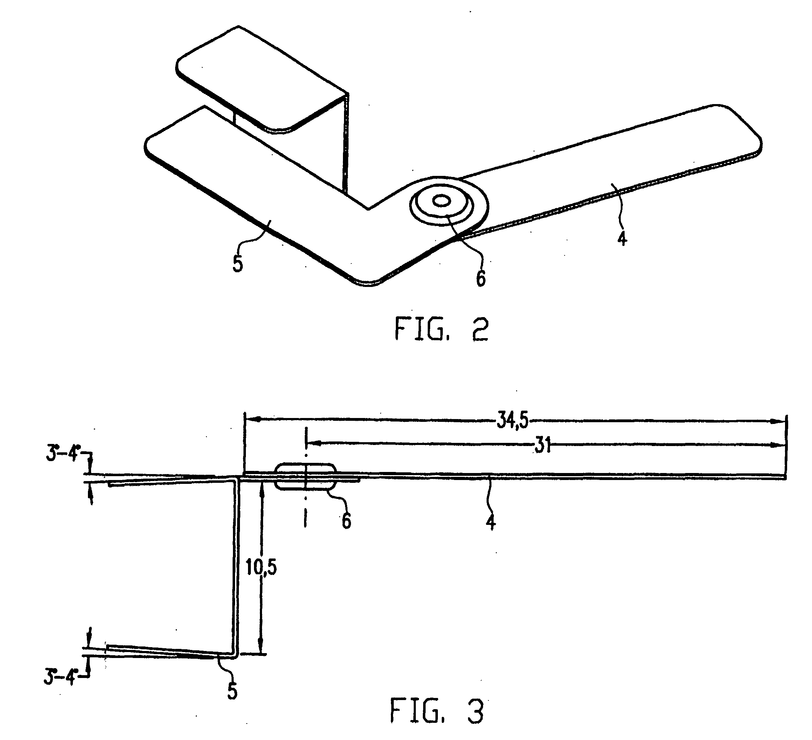

Fig. 2 zeigt eine perspektivische Darstellung der bevorzugten Ausführungsform der mit Bezug auf Fig. 1 beschriebenen Entstörvorrichtung. Eine Besonderheit der bevorzugten Ausführungsform ist eine ungleiche Form der Schenkel der U-förmigen Befestigungseinrichtung 5. Dabei erfüllt einer der Schenkel zwei Funktionen. Zum einen umgreift der Schenkel zusammen mit dem gegenüberliegenden Schenkel die Einsteckkarte 1 und sorgt somit für eine elektrisch leitende, federnde und lösbare Klemmverbindung der Entstörvorrichtung mit der Einsteckkarte 1. Zum anderen weist ein Bereich des Schenkels die Öffnung oder dergleichen zur Befestigung des Arms 4 auf. Der Arm 4 ist somit in einer Hauptebene der Entstörvorrichtung bzw. einer Hauptebene der Einsteckkarte 1 bewegbar bzw. schwenkbar. In einer alternativen Ausführungsform kann der Arm in einer Ebene, die gegenüber einer Hauptebene der Entstörvorrichtung geneigt ist, schwenkbar sein. Ein wesentliches Merkmal der Erfindung ist dabei, dass der Resonanzabgleich durch Schwenken des Arms erreicht werden kann.

Fig. 3 zeigt eine schematische Darstellung einer Seitenansicht der bevorzugten Ausführungsform der Entstörvorrichtung. Die Entstörvorrichtung umfasst in der bevorzugten Ausführungsform einen Arm 4, eine Befestigungseinrichtung 5 und eine Verbindungseinrichtung 6, die beispielsweise einen Rohrniet umfasst. Die Länge des Arms beträgt in etwa 34,5 mm. Der Schwenkradius des Arms beträgt in etwa 31 mm. Die Schenkel der Befestigungseinrichtung sind in etwa 10,5 mm voneinander beabstandet und jeweils um in etwa 3° gegenüber einem rechten Winkel aufeinanderzulaufend gebogen, um die elektrisch leitende, federnde und lösbare Klemmverbindung mit der Einsteckkarte 1 zu gewährleisten.

## Patentansprüche

1. Einsteckkarte (1) zur Funkkommunikation, enthaltend:
eine Sende- und Empfangseinrichtung und
eine Antenne (2), die mit der Sende- und Empfangseinrichtung verbunden ist und zumindest teilweise aus einem elektrisch leitenden Körper (3) der Einsteckkarte (1) herausragt,
**gekennzeichnet durch**
einen elektrisch leitenden Arm (4), der:
eine effektive Länge hat, die im wesentlichen einem Viertel einer für die Funkkommunikation maßgeblichen Wellenlänge entspricht,
mit dem Körper (3) elektrisch leitend verbunden ist und
im Bereich der Antenne (2) bewegbar angeordnet ist, so dass der Arm (4) während der Funkkommunikation in mindestens einer Stellung in Resonanz ist und ein elektrisches Feld, das aufgrund der Funkkommunikation auf dem Körper (3) entsteht, bei dieser Stellung des Arms (4) minimiert wird, und somit eine störende Beeinflussung einer Vorrichtung, die die Einsteckkarte (1) aufnimmt, minimiert wird.

2. Einsteckkarte (1) nach Anspruch 1, wobei der Arm (4) im wesentlichen in einer Hauptebene der Einsteckkarte (1) schwenkbar ist.

3. Einsteckkarte (1) nach Anspruch 1 oder 2, wobei der Arm (4) im wesentlichen metallisch ist.

4. Einsteckkarte (1) nach einem der Ansprüche 1 bis 3, wobei die Länge des Arms (4) kleiner als ein Viertel der Wellenlänge ist.

5. Entstörvorrichtung, enthaltend:
eine Befestigungseinrichtung (5), die so dimensioniert ist, dass sie mit einem zumindest teilweise elektrisch leitenden Körper (3) einer PCMCIA-(Personal Computer Memory Card International Association-) bzw. PC-Einsteckkarte (1) zur Funkkommunikation verbindbar ist und diesen zumindest teilweise umgreift, und
einen elektrisch leitenden Arm (4), der mit der Befestigungseinrichtung (5) bewegbar verbunden und so dimensioniert ist, dass er:
mit dem Körper (3) elektrisch leitend verbindbar ist,
eine effektive Länge hat, die im wesentlichen einem Viertel einer für die Funkkommunikation maßgeblichen Wellenlänge entspricht und in der Umgebung einer Antenne (2), die zumindest teilweise aus dem Körper (3) der Einsteckkarte (1) herausragt, im wesentlichen in einer Hauptebene der Einsteckkarte (1) schwenkbar angeordnet ist,
so dass der Arm (4) während der Funkkommunikation in mindestens eine Stellung geschwenkt werden kann, in der der Arm (4) in Resonanz ist und ein elektrisches Feld, das aufgrund der Funkkommunikation auf dem Körper (3) entsteht, minimiert wird.

6. Entstörvorrichtung nach Anspruch 5, wobei der Arm (4) im wesentlichen metallisch ist.

7. Entstörvorrichtung nach Anspruch 5 oder 6, wobei die Länge des Arms (4) kleiner als ein Viertel der Wellenlänge ist.

8. Entstörvorrichtung nach einem der Ansprüche 5 bis 7, wobei die Befestigungseinrichtung (5) im wesentlichen U-förmig und/oder auf die Einsteckkarte (1) aufsteckbar ausgebildet ist.

9. Entstörvorrichtung nach einem der Ansprüche 5 bis 8, wobei die Befestigungseinrichtung (5) federnd und/oder auf die Einsteckkarte (1) klemmbar ist.

10. Entstörvorrichtung nach einem der Ansprüche 5 bis 9, wobei die Befestigungseinrichtung (5) den Arm (4) mit dem Körper (3) elektrisch leitend verbindet.

## Claims

1. Plug-in card (1) for radio communication, comprising.
a transmitting and receiving device and
an antenna (2) which is connected to the transmitting and receiving device and projects at least partially from an electrically conductive body (3) of the plug-in card (1),
**characterized by**
an electrically conductive arm (4), which:
is of an effective length which corresponds substantially to one quarter of a wavelength appropriate for radio communication,
is connected to the body (3) in an electrically conductive manner, and
is movably arranged in the region of the antenna (2) so that, during radio communication, the arm (4) is in resonance in at least one position and an electric field produced on the body (3) due to the radio communication is minimized when the arm (4) is in this position, and a disturbing interference on a device which receives the plug-in card (1) is thus minimized.

2. Plug-in card (1) according to claim 1, the arm (4) being substantially pivotable in a principal plane of the plug-in card (1).

3. Plug-in card (1) according to either of claims 1 or 2, the arm (4) being substantially of metal.

4. Plug-in card (1) according to any one of claims 1 to 3, the length of the arm (4) being less than one quarter of the wavelength.

5. Interference suppression device, comprising:
a fastening device (5) which is of such dimensions that it can be connected, for the purpose of radio communication, to an at least partially electrically conductive body (3) of a PCMCIA (Personal Computer Memory Card International Association) or PC plug-in card (1) and at least partially encompasses the latter, and
an electrically conductive arm (4) which is movably connected to the fastening device (5) and is of such dimensions that:
it can be connected to the body (3) in an electrically conductive manner,
it is of an effective length which corresponds substantially to one quarter of a wavelength appropriate for radio communication, and
in the region around an antenna (2) which projects at least partially from the body (3) of the plug-in card (1) , it is arranged so as to be substantially pivotable in a principal plane of the plug-in card (1),
so that, during radio communication, the arm (4) can be pivoted into at least one position in which the arm (4) is in resonance and an electric field produced on the body (3) due to the radio communication is minimized.

6. Interference suppression device according to claim 5, the arm (4) being substantially of metal.

7. Interference suppression device according to either of claims 5 or 6, the length of the arm (4) being less than one quarter of the wavelength.

8. Interference suppression device according to any one of claims 5 to 7, the fastening device (5) being substantially U-shaped and/or of such design that it can be slipped on to the plug-in card (1).

9. Interference suppression device according to any one of claims 5 to 8, the fastening device (5) being resilient and/or such that it can be pressed on to the plug-in card (1).

10. Interference suppression device according to any one of claims 5 to 9, the fastening device (5) connecting the arm (4) to the body (3) in an electrically conductive manner.

## Revendications

1. Carte insérable (1) pour la communication radio, comprenant :
un dispositif d'émission et de réception et
une antenne (2), reliée au dispositif d'émission et de réception et dépassant au moins partiellement d'un élément conducteur électrique (3) de la carte insérable (1),
**caractérisée par**
un bras conducteur électrique (4) qui :
a une longueur efficace qui correspond sensiblement à un quart d'une longueur d'onde de la communication radio,
est relié de manière électrique à l'élément (3) et
est disposé de manière mobile au niveau de l'antenne (2), de telle sorte que le bras (4) soit en résonance pendant la communication radio dans au moins une position et un champ électrique, qui apparaît du fait de la communication radio sur l'élément (3), est minimisé dans cette position du bras (4), et une influence perturbante d'un dispositif qui reçoit la carte insérable (1), est ainsi minimisée.

2. Carte insérable (1) selon la revendication 1, dans laquelle le bras (4) est pivotante sensiblement dans un plan principal de la carte insérable (1).

3. Carte insérable (1) selon la revendication 1 ou 2, dans laquelle le bras (4) est essentiellement constitué de métal.

4. Carte insérable (1) selon l'une des revendications 1 à 3, dans laquelle la longueur du bras (4) est inférieure à un quart de la longueur d'onde.

5. Dispositif d'antiparasitage comprenant :
un dispositif de fixation (5) dimensionné de telle sorte qu'il puisse être relié à un élément (3) au moins partiellement conducteur électrique d'une carte PCMCIA (Personal Computer Memory Card International Association) ou d'une carte insérable pour PC (1) pour une communication radio et qu'il entoure au moins partiellement celle-ci, et
un bras conducteur électrique (4), qui est relié de manière mobile au dispositif de fixation (5) et qui est dimensionné de telle sorte qu'il :
puisse être relié électriquement avec l'élément (3),
ait une longueur efficace qui correspond sensiblement à un quart d'une longueur d'onde de la communication radio et
soit disposé à proximité d'une antenne (2), qui dépasse au moins partiellement de l'élément (3) de la carte insérable (1), de manière pivotante sensiblement dans un plan principal de la carte insérable (1),
de telle sorte que le bras (4) puisse être pivoté, pendant la communication radio dans au moins une position dans laquelle le bras (4) est en résonance et un champ électrique, qui apparaît du fait de la communication radio sur l'élément (3), soit minimisé.

6. Dispositif d'antiparasitage selon la revendication 5, dans lequel le bras (4) est principalement constitué de métal.

7. Dispositif d'antiparasitage selon la revendication 5 ou 6, dans lequel la longueur du bras (4) est inférieure à un quart de la longueur d'onde.

8. Dispositif d'antiparasita ge selon l'une des revendications 5 à 7, dans lequel le dispositif de fixation (5) a sensiblement la forme d'un U et/ou est disposé de manière enfichable sur la carte insérable (1).

9. Dispositif d'antiparasitage selon l'une des revendications 5 à 8, dans lequel le dispositif de fixation (5) peut être élastique et/ou bloqué sur la carte insérable (1).

10. Dispositif d'antiparasitage selon l'une des revendications 5 à 9, dans lequel le dispositif de fixation (5) relie le bras (4) de manière électrique à l'élément (3).
